# EUROPEAN PATENT APPLICATION

(11) **EP 4 480 318 A1**
(43) Date of publication of application: **25.12.2024**
(21) Application number: 23305968.2
(22) Date of filing: 19.06.2023
(51) Int. Cl.: A23F 5/04, A23F 5/44, A01H 4/00

(54) **METHOD AND SYSTEM FOR PREPARING A COFFEE BEVERAGE AND A ROASTER**

(71) Applicant: Kunz, Henri, 75007 Paris (FR)
(72) Inventor: Kunz, Henri, 75007 Paris (FR)

(57) **Abstract**

A method and a system for preparing a coffee beverage comprise the step of extracting the coffee beverage from a coffee cell culture. Preferably, the coffee cell culture is dried and/or roasted prior to extraction. The inventive system and method provide a sustainable production of coffee beverages at reasonable costs.

## Description

### TECHNICAL FIELD

The present invention relates to a method and a system for preparing a coffee beverage as well as to a roaster and a coffee cell culture.

### PRIOR ART

Coffee beverages are prepared by first drying, then roasting and finally grinding coffee beans of a coffee plant before the coffee beverage is extracted by passing hot water through the coffee ground, thereby usually using a filter.

Depending on their lifestyle, the consumers use devices for grinding their coffee beans themselves or they buy already grinded beans. Connoisseurs even roast the coffee beans themselves or they use green coffee i.e., unroasted beans, to prepare their beverage.

WO 2023/028616 A1 suggest an alternative coffee beverage that tastes and smells like brewed coffee, but which does not require growth, harvest, processing, and roasting coffee beans. The substitutes come from a multiple of different plants and the mixture has to be chosen carefully in order to obtain flavors at least similar to the unique coffee flavors.

In addition, it is known to cultivate coffee plant cells. It is also known to yield coffee aromatics from plant cell suspension cultures.

Townsley, P.M. (1974). Production of Coffee from Plant Cell Suspension Cultures. Canadian Institute of Food Science and Technology Journal, 7(1), 79-81. doi:10.1016/S0315-5463(74)73854-8 suggests roasting suspension cultures of Coffea arabica in order to obtain coffee aromatics of green or roasted coffee beans.

Ibrahim M.S.D. and Tresniawati C. (2020). lOP Conf. Ser.: Earth Environ. Sci. 418 012013 describes coffee propagation using somatic embryogenesis technique for mass production of coffee seedlings.

In the state of the art, either coffee aromatics are searched for alternatives coffee beverages or cell-cultures are used to change or reproduce coffee plants.

The universally popular original coffee beverage is still made of roasted and ground coffee beans or, more rarely, made of ground green beans, thereby using beans from coffee plants grown by using traditional methods. However, growing coffee plants and harvest coffee beans is expensive, needs a lot of human manpower, extensive arable land and includes long transport routes.

### SUMMARY OF THE INVENTION

It is therefore an object to provide a remedy for the above-mentioned disadvantages.

This object is achieved by the inventive method for preparing a coffee beverage which comprises the step of extracting the coffee beverage from a coffee cell culture.

Cell-cultured coffee is a form of coffee made by cell culture technology, which involves deriving coffee cell lines from coffee and growing them in a lab through cell culture techniques. The specific steps and requirements for producing cell cultured coffee may vary depending on the technology and methods used. In general, the coffee cells are cultivated in a controlled environment, they are provided with the necessary nutrients and growth factors, and their growth conditions are optimized to produce coffee that is genetically identical to traditional coffee.

This type of production is more sustainable and efficient, requiring fewer natural resources and external inputs while also addressing supply challenges that traditional coffee growing faces. There is no need for intensive farming practices or monoculture, which helps to reduce greenhouse gas emissions and minimize the impact on local ecosystems. A sustainable solution for an ever-growing consumer base with finite resources is created.

Cell-cultured coffee may be cultivated all year and near consumers, decreasing prices and enhancing accessibility. It can provide distinct and better taste and quality while cutting production costs and coffee prices.

Cell cultured coffee is 100% coffee at a genetic level and is designed to taste and evoke the same emotions as traditional coffee.

Providing and drinking a cell cultured coffee beverage therefore allows to enjoy the favourite drink while contributing to a more sustainable and environmentally friendly future.

Various methods can be used for producing the cell-cultured coffee. Preferably, tissue culture is used to obtain callus, which is preferably processed further for direct consumption. Alternatively, gene editing or precision fermentation can be used as well. Preferably, coffea arabica is used. Other coffee plants can be used as well. Preferably, cells from the leaves and/or from the beans are used. Cells from other parts of the plant can be used as well. A callus extract can be used, or stem cells can be propagated in a single cell suspension culture.

In precision fermentation (PF), the recombinant DNA is injected into a microbe or bacteria, which is then cultivated in bioreactors, and the output is purified to obtain the desired product, for example, protein molecules. In plant molecular farming (PMF), recombinant DNA is introduced into a plant cell and this cell is subsequently grown in a manner that is typical of agriculture, such as in labs, fields, greenhouses, or vertical farming. The desired components, such as caffeine, are subsequently extracted by cultivating and purifying the plant cells.

Preferably, dried coffee cell culture is used. Preferably, the coffee cell culture is dried using freeze-drying. Dried coffee cell culture enables an easy handling of the coffee material to be extracted in order to obtain the coffee beverage. Preferably the dried coffee cell culture is provided in the form of a powder or granulates.

Preferably, roasted coffee cell culture is used. Roasted coffee cell culture enables a flavour and a taste which is a pleasant or even almost identical to the flavour and taste of dried coffee beans. Roasted coffee cell culture, also called roasted cellular coffee, has the advantage that the volume is increased about 70% compared to the unroasted coffee cell culture. The volume of farm-grown coffee only increases by 30% when roasted.

Roasted cellular coffee absorbs and retains more water during extraction compared with farm-grown ground coffee. Cellular coffee has a much lower density and a lower tendency of agglomeration compared to farm-grown ground coffee, irrespective whether the farm-ground coffee is roasted or not.

Roasted coffee cell culture has the advantage, that less material has to be used for obtaining a similar or even the same taste and flavour in a coffee beverage.

In some variants of the inventive method, the coffee cell culture is dried prior to roasting. In other variants of the inventive method, the coffee cell culture is roasted without drying, so that the coffee cell culture is dried within the roaster. For example, it is carefully dried with a gently starting heating process within the roaster, thereby avoiding bursting of the cells. In some preferred embodiments, hot air is used to dry the coffee cell culture within the roaster.

In some variants of the method, the coffee cell culture is roasted before it is sold to the consumer. In other embodiments, it is sold in an unroasted form and it is roasted shortly before the coffee beverage is extracted. In some embodiments, the roaster is therefore suitable for roasting small amounts of the cell culture material, especially the dried cell culture powder. In other embodiments, it is suitable for roasting large amounts or even for mass production. In some embodiments, the coffee cell culture is sold undried and it is dried during roasting.

The maybe dried and/or maybe already roasted coffee cell culture can be provided in an amount sufficient for a multiple of coffee beverage servings, for example at least for 10, 20, 50 or 100 servings. In other embodiments, it is provided in an amount for extraction of a single or double serve of the coffee beverage. In some variants, the user himself doses the correct amount for one or two servings. In other embodiments, the amounts are packed in sachets or capsules or in any other kind of containers suitable to be used with a system for preparing coffee beverages.

Additional flavours can be mixed to the coffee cell culture, especially to the dried and/or to the roasted coffee cell culture. In other embodiment, no additional flavours are added so that a pleasant or pure coffee taste and flavour is obtained in the coffee beverage.

The coffee beverage can be prepared by filling dried and roasted coffee cell culture material into a filter and by then pouring warm or hot water into the filter, so that the water passes through the cell culture material, thereby forming the extracted coffee beverage.

In preferred embodiments a system for preparing a coffee beverage according to the method as mentioned above is present. The system comprises an extraction unit for extracting a coffee beverage from the coffee cell culture. The extraction unit is preferably an extraction unit known for the use with roasted and ground coffee beans. The extraction unit preferably comprises a water supply, a heater for heating the water, a receptacle for receiving the dried and maybe already roasted coffee cell culture material, a means for exposing the cell culture material to the heated water, and a means for extracting the coffee liquid, wherein the coffee liquid is filtered.

In some embodiment, the system comprises a means for roasting the coffee cell culture material as well. The filter can be integrated in the system, it can be a paper filter or the like, which is put in an according receptacle, or it can be part of a container which comprises the cell culture material, wherein the container is put as a whole into the system and is penetrated by the heated water.

In other embodiments, the roaster for roasting the coffee cell culture is a device separate from the extracting device. Irrespective of whether the roaster is integrated in a housing together with the extraction unit or whether it is separate, the roaster can be a roaster well known in the state of the art for roasting grounded or whole coffee beans. The roaster preferably comprises a heatable, moveable drum with an interior space for receiving the coffee cell culture to be roasted. In other embodiments, the roaster generates a flow of hot air and there is no moveably drum. In further embodiments, the drum is moveable and the roaster comprises means to generate a flow of hot air.

Preferably the drum is rotatable, preferably around a horizontal axis. However, in other embodiments, the axis can also extend in vertical direction or be oblique. Preferably, the drum is rotated with a minimum speed of 60 rpm (revolutions per minute). This prevents overheating of the dried coffee cell culture powder. The maximum speed is preferably 240 rpm. A preferred speed is around 120 rpm.

In some embodiments, the drum can only be rotated. In other embodiments, the drum can only be vibrated. The vibration speed is preferably 40 to 60 Hz. The vibration period is preferably 500 ms. The drum vibration prevents sticking of the powder on the drum, so that parts of the powder are not burned during roasting.

In preferred embodiment, the drum can be rotated and vibrated. Rotation and/or vibration ensures a homogeneous heating and therefore homogeneous roasting of the coffee cell culture. The homogeneity is maximized when the drum is rotatable and vibratable.

The rotational speed and the vibration speed are preferably adjusted to prevent sticking of the cell cultured coffee material on the drum in order to ensure a homogeneous roast of the cell cultured coffee material.

Preferably, no stirrer is used inside of the drum.

When roasting with hot air, especially when the roaster drum is not moving, the coffee cell culture material is preferably arranged within a vertical oriented chamber. The cell culture material is then homogeneously surrounded by hot air. Depending on the flow, the cell culture material can either slowly fall in the vertically oriented flow, or it can be carried in the flow. This is especially the case when the coffee cell culture material is a powder. The roast degree depends on the time-temperature profile of the air and the residence time of the material, especially the powder, in the hot air stream.

By providing an according anti-sticking surface treatment or surface material of the interior wall of the drum, the coffee cell culture material cannot stick and clump together, which enhances the homogeneity of the roasting as well. The anti-sticking surface may be Teflon or another appropriate coating.

In order to ensure that the coffee cell culture material is perfectly roasted, at least one, preferably at least three or four temperature sensors are present. One temperature sensor may measure the temperature of the interior of the drum, one temperature sensor may measure the temperature on the outside of the outer wall of drum, one temperature sensor may measure the temperature of the heater and an additional sensor may be an infrared-sensor measuring the temperature at a distance of the drum. The reading of the at least one sensor allows designing a time-temperature roast-profile which can be used to control the roaster.

The heater of the roaster is preferably an induction heater. The induction heat power is preferably 450 Watts and preferably at least 300°C.The induction heat period is preferably 5000 ms, or preferably about 10 times higher than the vibration period, if applicable. This allows a very dynamic roast profile, so that each kind of coffee cell culture can be roasted with parameters yielding in a pleasant coffee flavour and taste. Other kind of heaters can be used as well.

Preferably, the roaster is closable hermetically for roasting the coffee cell culture. This ensures that no flavour can escape from the interior during roasting. In addition, the flavour leaves the drum only after the roasting is finished so that it can be smelled in the final state and intermediate states do not diminish this experience.

The invention claimed also comprises a coffee cell culture prepared to be used instead of and like ground coffee beans for extraction of a coffee beverage. Preferably, this cell culture is provided in the shape of a powder. The powder can be provided in a sachet or a stiff container or any other kind of container suitable to take out the amount needed for roasting or for directly preparing the coffee beverage by extraction. Preferably, the powder provided is already dried and/or roasted. The roasted powder can be provided in a container suitable for taking out the requested amount. However, it can be in a single or double serve sachet or cartridge as known under the Trademark "Nespresso".

### BRIEF DESCRIPTION OF THE DRAWINGS

Preferred embodiments of the invention are described in the following with reference to the drawings, which have the purpose of illustrating the present preferred embodiments of the invention and not for the purpose of limiting the same. In the drawings
Figure 1 shows a time-temperature profile of a roasting process;
Figure 2 shows an unroasted coffee cell structure and
Figure 3 shows the roasted coffee cell structure.

### DESCRIPTION OF PREFERRED EMBODIMENTS

In a first example of the inventive method, the following set-up is used:
- Device: AeroPress^{®} Coffeemaker
- Brewer Position: Inverted
- Dose: 1.3 g Cell Culture
- Hot water: Coffee Water, 92°C
- Scale: 22-23 g hot water
- Filters: Paper Filter, Rinsed
- Timer: 2 minutes
- Cell culture: coffee cell culture based on coffea arrabica, available on the market

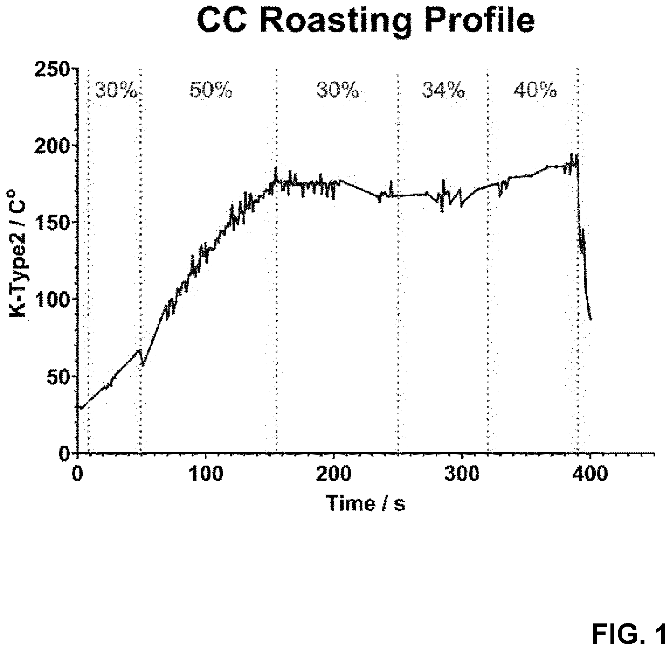

The method to obtain a coffee beverage is as follows:
1. Fill 1 gram to 8 grams of the coffee cell culture into a drum of a roaster
2. Rotate the drum at a speed of 120 rpm
3. Use the time-temperature profile according to figure 1 while roasting
4. Pour roasted coffee cell culture into chamber
5. Pour 22-23 g of water and stir 35 times gently
6. At 1:20 screw on cap and press out remaining air
7. Flip and press for 30 seconds from 1:30 - 2:00
8. This results in about 10-11 g of concentrate with around TDS of 0.88 or 7.78% of extraction yield (TDS: Total Dissolved Solids)
9. Serve

In figure 1, the percentages refer to the power of the roaster during the roasting process.

The brew ration defines the sensory profile of a cell cultured coffee beverage as well. The above-mentioned method was performed once with a brew ratio of 1:16 and once with a brew ratio of 1:80. 1:16 is more concentrated that 1:80 as less water is used to extract the same amount of powder. 1:16 means that 16 time more water than coffee powder is given into the filter. For example, a brew ratio 1:16 means that 2 grams powder is extracted with 32 grams hot water, or 1 powder water with 16 grams water.

The brew ratio of 1:16 has the following sensory profile by human tasters.

| | |
|---|---|
| Aroma: | malty, cereal, slightly dark roasted, slightly dusty |
| Flavour: | slightly burnt, cereal, dark caramel, slightly acrid, barley, cooked cabbage |
| Acidity: | low |
| Sweetness: | low |
| Bitterness: | medium-low, slightly caramel-bitterness |
| Body: | low |

The brew ratio of 1:80 is as follows

| | |
|---|---|
| Aroma: | slightly malty, bread-crust, slightly caramelized |
| Flavour: | strong cereal, barley, soup-like, fishy-note, slightly acrid (pungent), savoury, slightly sushi-like |
| Acidity: | no perceivable acidity |
| Sweetness: | very low |
| Bitterness: | medium-low |
| Body: | weak body |

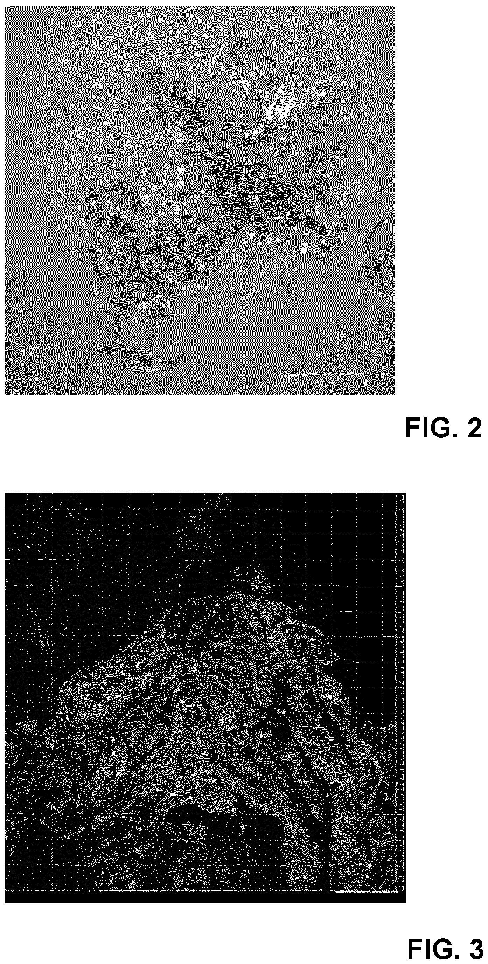

Figure 2 shows in confocal microscopy an unroasted coffee cell culture and figure 3 the roasted coffee cell culture.

The inventive system and method provide a sustainable production of coffee beverages at reasonable costs.

## Claims

1. A method for preparing a coffee beverage, wherein the method comprises the step of extracting the coffee beverage from a coffee cell culture.

2. The method according to claim 1 wherein dried coffee cell culture is used.

3. The method according to one of claims 1 or 2 wherein roasted coffee cell culture is used.

4. The method according to claim 3 wherein dried coffee cell culture is roasted shortly before the coffee beverage is extracted.

5. The method according to claim 4 wherein dried coffee cell culture is roasted and provided in an amount for extraction of a single or double serve of the coffee beverage.

6. The method according to any one of claims 1 to 5 wherein no additional flavours are added to the coffee cell culture.

7. A system for preparing a coffee beverage according to any one of claims 1 to 6 wherein the system comprises an extraction unit for extracting a coffee beverage from a coffee cell culture.

8. The system according to claim 7 wherein the system comprises a roaster for roasting the coffee cell culture.

9. A roaster for roasting a coffee cell culture to be used in the method according to any one of claims 1 to 6 wherein the roaster comprises a heatable, moveable drum with an interior space for receiving the coffee cell culture to be roasted.

10. The roaster according to claim 9 wherein the drum is rotatable, preferably around a horizontal axis.

11. The roaster according to one of claims 9 or 10 wherein the drum is vibratable.

12. The roaster according to any one of claims 9 to 11 wherein the roaster comprises at least one, preferably at least four temperature sensors.

13. The roaster according to any one of claims 9 to 12 wherein the roaster is closable hermetically for roasting the coffee cell culture.

14. A coffee cell culture prepared to be used instead of and like ground coffee beans for extraction of a coffee beverage.

15. The coffee cell culture according to claim 14 wherein it is dried and/or roasted.
